# EUROPÄISCHE PATENTSCHRIFT

(11) **EP 3 004 919 B1**
(45) Veröffentlichungstag und Bekanntmachung des Hinweises auf die Patenterteilung: **19.02.2020**
(21) Anmeldenummer: 14725491.6
(22) Anmeldetag: 22.05.2014
(51) Int. Cl.: G01S 7/523, G01S 15/93

(54) **ULTRASCHALL SENDE- UND EMPFANGSVORRICHTUNG**
ULTRASONIC TRANSMISSION AND RECEPTION APPARATUS
DISPOSITIF ÉMETTEUR-RÉCEPTEUR D'ULTRASONS

(30) Priorität: 03.06.2013 DE 102013210236
(43) Veröffentlichungstag der Anmeldung: 13.04.2016
(73) Patentinhaber: Robert Bosch GmbH, 70442 Stuttgart (DE)
(72) Erfinder: BARTYLLA, David, 71229 Leonberg (DE); SCHMID, Dirk, 75397 Simmozheim (DE); RICHTER, Karl-Heinz, 71263 Weil Der Stadt (DE)
(86) Internationale Anmeldenummer: PCT/EP2014/060559
(87) Internationale Veröffentlichungsnummer: WO 2014/195142

(56) Entgegenhaltungen:
- DE-A1- 4 414 746
- US-A- 3 876 938
- US-A- 6 074 346

## Beschreibung

### Stand der Technik

Die vorliegende Erfindung betrifft eine Ultraschall Sende- und Empfangsvorrichtung mit einem Übertrager.

Ultraschalleinparksysteme unterstützen Fahrer bei Einparkvorgängen im Alltag. Ein voll ausgestattetes Ultraschalleinparksystem enthält aktuell 12 Ultraschallsensoren, wobei je 6 Sensoren vorne und hinten angeordnet sind. Dabei können Objekte in wenigen Zentimetern Abstand sowie mehreren Metern Abstand detektiert werden. Um Reichweiten von mehreren Metern zu erzielen und gleichzeitig die Nahmessfähigkeit zu erhalten, muss eine Ultraschall Sende- und Empfangsvorrichtung die zur Verfügung stehende Energie optimal nutzen und gleichzeitig die Ausschwingzeit des Ultraschallsensors so gering wie möglich halten.

In einer Ultraschall Sende- und Empfangseinrichtung wird durch eine Sendeschaltung ein hochfrequentes Wechselspannungssignal als Sendesignal erzeugt. In einer Sendephase wird dieses Wechselspannungssignal an einen Ultraschallwandler angelegt, um Ultraschallwellen auszusenden. Da die Sendeleistung und damit die Reichweite einer Ultraschall Sende- und Empfangseinrichtung maßgeblich von der Spannungsamplitude des Sendesignals abhängt, wird die Spannungsamplitude des Sendesignals vor der Einspeisung in den Ultraschallwandler durch einen Übertrager verstärkt. In einer Empfangsphase werden reflektierte Ultraschallsignale durch den Ultraschallwandler empfangen und dort von einer Empfangsschaltung abgegriffen.

Das Sendesignal mit der durch den Übertrager verstärkten Spannungsamplitude liegt dabei während der Sendephase am Eingang der Empfangsschaltung an. Da diese Empfangsschaltung zur Auswertung von Echosignalen mit einer sehr geringen Amplituden geeignet ist, ist deren Spannungsfestigkeit begrenzt. Damit die Empfangsschaltung nicht beschädigt wird, ist diese mit einem Vorwiderstand geschützt, oder aber die Komponenten der Empfangsschaltung werden mit einer entsprechend hohen Spannungsfestigkeit ausgelegt.
Diese Schutzmaßnahmen zum Schutz der Empfangsschaltung verursachen allerdings zusätzliche Kosten bei der Herstellung der Ultraschall Sende- und Empfangseinrichtung durch teurere oder zusätzliche Komponenten.

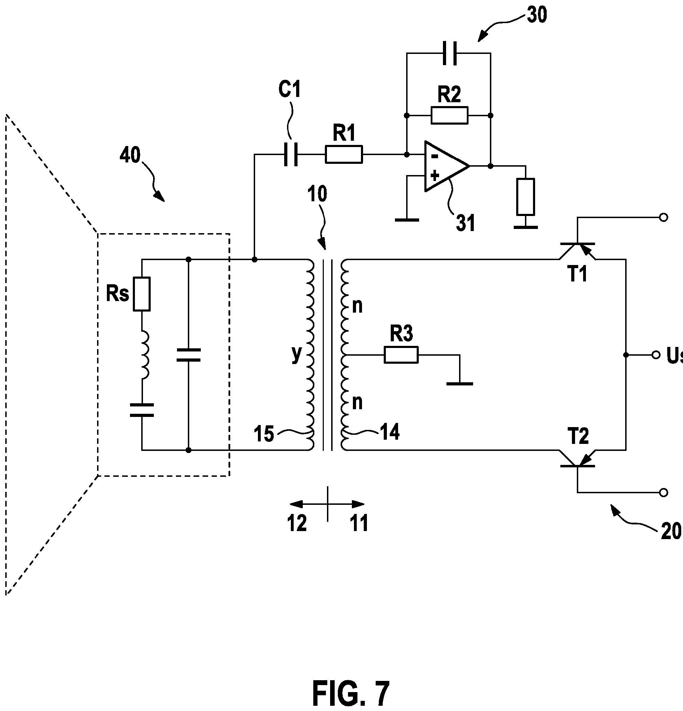

Eine Ultraschall Sende- und Empfangsvorrichtung nach dem Stand der Technik ist in Figur 7 gezeigt. Betrachtet man das Schaltungskonzept, so wird deutlich, dass die Schaltung nur für die Nahmessfähigkeit optimiert ist. Eine Empfangsschaltung 30 ist dabei durch einen invertierend geschalteten Operationsverstärker 31 ausgeführt. Die Empfangsschaltung ist durch einen Kondensator C1 gegenüber einem Ultraschallwandler 40 und der Sekundärspule 15 eines Übertragers 10 entkoppelt. Die Verstärkung des Operationsverstärkers 31 wird dabei durch einen zwischen den invertierenden Eingang des Operationsverstärkers 31 und den Eingang der Empfangsschaltung 30 geschalteten ersten Widerstand R1 und einen zwischen den Ausgang des Operationsverstärkers 31 und dessen invertierenden Eingang geschalteten zweiten Widerstand R2 wie folgt gegeben: v = -(R2/R1). Durch die Anforderung der optimal kurzen Ausschwingzeit ist R1=Rs. Dabei ist Rs ein Innenwiderstand des Ultraschallwandlers 40. Die nach dem Senden im System befindliche Energie wird bestmöglich über den ersten Widerstand R1 und den Innenwiderstand Rs dissipiert und in den Eingang des Operationsverstärkers 31 der Empfangsschaltung 30 fließt ein hoher Strom. Beim Senden wird ein Strom in die Primärspule 14 des Übertragers 10 eingespeist. Entsprechend den Windungszahlen des Übertragers auf der Primärseite 11 und der Sekundärseite 12 des Übertragers 10 fließt auf der Sekundärseite des Übertragers 10 ein Strom. Bei der Resonanzfrequenz des Übertragers und im eingeschwungenen Zustand teilt sich der Strom auf den Innenwiderstand Rs des Ultraschallwandlers 40 und den ersten Widerstand R1 proportional auf. Somit wird die Hälfte der Leistung im Empfangspfad unnötig abgezweigt. Der Ultraschallwandler 40 erhält nur die Hälfte der gesamten Leistung und liefert somit nur einen um 3dB reduzierten Schalldruck.

Eine Ultraschall Sende- und Empfangseinrichtung nach dem Oberbegriff des Anspruchs 1 ist aus der DE10136628B4, der DE69416129T2 und der DE3115321C2 bekannt.

### Offenbarung der Erfindung

Die erfindungsgemäße Ultraschall Sende- und Empfangseinrichtung umfasst eine Sendeschaltung zur Erzeugung eines Sendesignals an ihren Signalausgängen, einen Ultraschallwandler, der dazu geeignet ist, elektrische Signale in Schallsignale zu wandeln und Schallsignale in elektrische Signale zu wandeln, einen Übertrager, dessen Primärseite mit den Sendeausgängen der Sendeschaltung und dessen Sekundärseite mit dem Ultraschallwandler verbunden ist, und eine Empfangsschaltung zur Verarbeitung eines an ihrem Empfangseingang anliegenden Empfangssignals. Die Ultraschall Sende- und Empfangseinrichtung ist dadurch gekennzeichnet, dass der Empfangseingang der Empfangsschaltung über einen zusätzlichen Windungsabgriff des Übertragers an den Übertrager angeschlossen ist, wobei der zusätzliche Windungsabgriff derart in den Übertrager eingebracht ist, dass das transformierte Sendesignal an dem Empfangseingang der Empfangsschaltung mit einem geringeren Verstärkungsfaktor in seiner Spannungsamplitude verstärkt wird, als das transformierte Sendesignal das den Ultraschallwandler anregt. Ebenso vorteilhaft ist die Ultraschall Sende- und Empfangsvorrichtung dadurch gekennzeichnet, dass der Übertrager auf der Primärseite eine Primärspule mit einem ersten Primärwindungsabschnitt mit mindestens n Windungen umfasst. Die Sendeschaltung ist mit dem ersten Primärwindungsabschnitt verbunden, und regt den Übertrager über n Windungen des ersten Primärwindungsabschnittes an. Der Übertrager umfasst auf seiner Sekundärseite eine Sekundärspule mit y Windungen, die einen Teilwindungsabschnitt mit z Windungen umfasst, wobei z<y ist. Der Ultraschallwandler ist über alle y Windung der Sekundärspule mit dem Übertrager verbunden, und die Empfangsschaltung ist über alle z Windungen des Teilwindungsabschnittes mit dem Übertrager verbunden. Das Verhältnis zwischen den Windungsanzahlen z und n ist derart gewählt, dass ein Sendesignal, welches direkt über den Übertrager an die Empfangsschaltung übertragen wird, die Spannungsfestigkeit der Empfangsschaltung nicht übersteigt. In einer erfindungsgemäßen Vorrichtung kann die Verstärkung des Sendesignals gegenüber dem Empfangseingang der Empfangsschaltung unabhängig von der Verstärkung des Sendesignals gegenüber dem Ultraschallwandler gewählt werden. Dafür werden keine zusätzlichen Komponenten benötigt, da die Empfangsschaltung mittels einer Modifikation bereits vorhandener Komponenten vor Überspannungen geschützt wird. Auf diese Weise kann die Amplitude des transformierten Sendesignals an der Empfangsschaltung derart gewählt werden, dass die Komponenten der Empfangsschaltung nicht beschädigt werden. Die Erfindung betrifft ferner ein Fahrassistenzsystem und ein Fahrzeug mit einem Fahrassistenzsystem, wobei das Fahrassistenzsystem eine solche Ultraschall Sende- und Empfangsvorrichtung umfasst. Dadurch, dass der Teilwindungsabschnitt von der Sekundärspule umfasst wird, kann eine besonders kompakte Bauform erreicht werden.
Die Unteransprüche zeigen bevorzugte Weiterbildungen der Erfindung.
Es ist vorteilhaft, wenn die Ultraschall Sende- und Empfangsvorrichtung dadurch gekennzeichnet ist, dass der Übertrager auf der Primärseite eine Primärspule mit einem ersten Primärwindungsabschnitt mit mindestens n Windungen und einem zusätzlichen Windungsabschnitt mit z Windungen, der mit dem ersten Primärwindungsabschnitt überlappen kann, umfasst. Die Sendeschaltung ist dabei mit dem ersten Primärwindungsabschnitt verbunden, und regt den Übertrager über n Windungen des ersten Primärwindungsabschnittes an. Die Empfangsschaltung ist über alle z Windungen des zusätzlichen Windungsabschnittes mit dem Übertrager verbunden, und das Verhältnis zwischen den Windungsanzahlen z und n ist derart gewählt, dass ein Sendesignal, welches direkt über den Übertrager an die Empfangsschaltung übertragen wird, die Spannungsfestigkeit der Empfangsschaltung nicht übersteigt. Eine derartige Ausführungsform ist vorteilhaft, da der Verstärkungsfaktor für das Sendesignal zwischen der Sendeschaltung und der Empfangsschaltung frei gewählt werden kann. Der Verstärkungsfaktor ist nicht durch die Windungsanzahl des ersten Primärwindungsabschnittes begrenzt, da die Windungszahl z des zusätzlichen Windungsabschnittes größer sein kann als die Windungszahl n des ersten Primärwindungsabschnitts. Gleichzeitig wird im Falle einer Überlappung des zusätzlichen Windungsabschnitts mit dem ersten Primärwindungsabschnitt eine besonders kompakte Bauform erreicht, da Teile der Primärspule durch den zusätzlichen Windungsabschnitt und den ersten Primärwindungsabschnitt gemeinsam genutzt werden. Es ist auch möglich, dass die Windungszahl n des ersten Primärwindungsabschnitts größer sein kann, als die Windungszahl z des zusätzlichen Windungsabschnitts.
Ebenso vorteilhaft ist die Ultraschall Sende- und Empfangsvorrichtung dadurch gekennzeichnet, dass der Übertrager auf der Primärseite eine Primärspule mit einem ersten Primärwindungsabschnitt mit mindestens n Windungen umfasst. Die Sendeschaltung ist mit dem ersten Primärwindungsabschnitt verbunden, und regt den Übertrager über n Windungen des ersten Primärwindungsabschnittes an. Der Übertrager umfasst ferner eine Tertiärspule mit z Windungen, wobei der zusätzliche Windungsabgriff ein äußerer Windungsabgriff der Tertiärspule ist. Die Empfangsschaltung ist über alle z Windungen der Tertiärspule mit dem Übertrager verbunden, und das Verhältnis zwischen den Windungsanzahlen z und n ist derart gewählt, dass ein Sendesignal, welches direkt über den Übertrager an die Empfangsschaltung übertragen wird, die Spannungsfestigkeit der Empfangsschaltung nicht übersteigt. Dadurch, dass der zusätzliche Windungsabgriff von der Primärspule und der Sekundärspule des Übertragers entkoppelt ist, können andere entkoppelnde Elemente, wie z.B. ein im Stand der Technik gezeigter Kondensator, eingespart werden. Dadurch wird eine kompakte und kostengünstige Bauform erzielt.
Insbesondere kann nach der Erfindung am Eingang der Empfangsschaltung ein erster Schalter angeordnet sein, durch den die Eingangsseite der Empfangsschaltung von dem Übertrager getrennt werden kann. Somit kann die Empfangsschaltung während des Sendevorgangs von dem Übertrager getrennt werden, und ein zusätzlicher Schutz der übrigen Empfangsschaltung wird erzielt. Dies ist vorteilhaft, da die Spannungsfestigkeit des ersten Schalters höher als die Spannungsfestigkeit der Empfangsschaltung sein kann. Zudem wird eine Dämpfung des Sendesignals am Übertrager vermindert, da ein Leistungsabfluss über die Empfangsschaltung unterbunden werden kann.
In einer vorteilhaften Ausführungsform ist die erfindungsgemäße Ultraschall Sende- und Empfangsvorrichtung durch einen zuschaltbaren Dämpfungswiderstand gekennzeichnet, der geeignet ist, die Schwingungen des Ultraschallwandlers zu dämpfen. Durch einen zuschaltbaren Dämpfungswiderstand wird eine Dämpfung des Ultraschallwandlers während der Sendephase minimiert. Nach der Sendephase kann durch ein Zuschalten des Dämpfungswiderstandes jedoch ein schnelles Ausschwingen des Ultraschallwandlers erreicht werden. Es wird somit ein kurzer Zyklus zwischen aufeinanderfolgenden Sende- bzw. Empfangsphasen erreicht. In der Empfangsphase kann der Dämpfungswiderstand abgeschaltet werden und es erfolgt keine Dämpfung des Empfangssignals.

In einer weiteren vorteilhaften Ausführungsform ist die Ultraschall Sende- und Empfangsvorrichtung dadurch gekennzeichnet, dass der zuschaltbare Dämpfungswiderstand und die Sendeschaltung mit demselben Windungsabschnitt verbunden sind. Auf diese Weise kann die Anzahl der Windungsabgriffe an dem Übertrager und somit die dadurch verursachten Kosten und auch der Platzbedarf minimiert werden.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Schaltplan einer Ultraschall Sende- und Empfangsvorrichtung gemäß einer ersten Ausführungsform der Erfindung;
- Figur 2: ein Schaltplan einer Ultraschall Sende- und Empfangsvorrichtung gemäß einer zweiten Ausführungsform der Erfindung;
- Figur 3: ein Schaltplan einer Ultraschall Sende- und Empfangsvorrichtung gemäß einer dritten Ausführungsform der Erfindung;
- Figur 4: ein Schaltplan einer Ultraschall Sende- und Empfangsvorrichtung gemäß einer vierten Ausführungsform der Erfindung;
- Figur 5: ein Schaltplan einer alternativen Ausführungsform der Empfangsschaltung der Ultraschall Sende- und Empfangsvorrichtung;
- Figur 6: ein Schaltplan einer Ultraschall Sende- und Empfangsvorrichtung gemäß einer fünften Ausführungsform der Erfindung; und
- Figur 7: ein Schaltplan einer Ultraschall Sende- und Empfangsvorrichtung nach dem Stand der Technik.

### Ausführungsformen der Erfindung

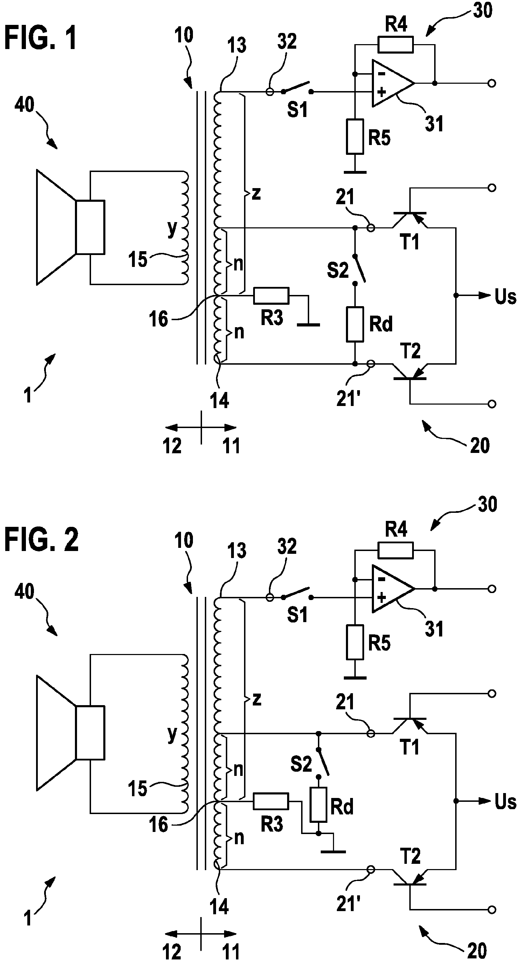

Figur 1 zeigt einen Schaltplan einer Ultraschall Sende- und Empfangsvorrichtung 1 gemäß einer ersten Ausführungsform der Erfindung. Die Sendeschaltung 20 dient zur Erzeugung eines Sendesignals an zwei Signalausgängen 21 bzw. 21'. In dieser Ausführungsform wird die Sendeschaltung 20 mit einer Gleichspannung Us versorgt, die zwischen einer Eingangsleitung und dem Massepotential der Ultraschall Sende- und Empfangsvorrichtung 1 anliegt. Die Gleichspannung Us liegt an den Emittern der beiden PNP-Transistoren T1 und T2 der Sendeschaltung 20 an, und kann von diesen geschaltet werden. Zur Erzeugung eines Sendesignals schalten die beiden Transistoren T1 und T2 abwechselnd. Das Schalten der Transistoren T1 und T2 erfolgt dabei durch zwei zueinander phasenverschobene Schaltsignale, die jeweils an die Basis der Transistoren T1 und T2 abgegeben werden. Die Signalquelle für die Schaltsignale ist in Figur 1 nicht gezeigt. Wird die Gleichspannung Us von einem der Transistoren T1 bzw. T2 durchgeschaltet, so liegt diese an jeweils einem Ausgang der Sendeschaltung an, wobei die Ausgänge der Sendeschaltung 20 jeweils durch die Kollektoren der Transistoren T1 und T2 gebildet sind. Durch ein hochfrequentes wechselseitiges Schalten der Transistoren T1 und T2 wird damit ein hochfrequentes Sendesignal mit der Amplitude Us erzeugt.

Die Ausgänge 20, 20' der Sendeschaltung 20 sind mit zwei unterschiedlichen Windungsabgriffen einer Primärspule 14 mit insgesamt (n+z) Windungen, auf einer Primärseite 11 eines Übertragers 10 verbunden. Diese beiden Windungsabgriffe sind durch 2n Windungen voneinander getrennt, wobei einer der Windungsabgriffe an einem äußeren Ende der Primärspule 14 liegt. Durch diese 2n Windungen wird ein erster Primärwindungsabschnitt beschrieben. Der erste Primärwindungsabschnitt umfasst dabei einen mittleren Windungsabgriff 16, der in der Mitte der 2n Windungen des ersten Primärwindungsabschnitts angebracht ist. Dieser mittleren Windungsabgriff 16 ist über einen dritten Widerstand R3 mit dem Massepotential der Ultraschall Sende- und Empfangsvorrichtung 1 verbunden. Durch eine abwechselnde Anregung der beiden Abschnitte mit n Windungen durch das Sendesignal wird der Übertrager 10 über jeweils n Windungen abwechselnd angeregt. Da der anregende Strom in unterschiedlichen Richtungen durch die jeweils n Windungen des ersten Primärwindungsabschnitts fließt, wird in Summe eine Anregung des Übertragers erreicht, die einer Anregung mittels einer Wechselspannung mit gleicher Amplitude Us über n Windungen entspricht. In einer alternativen Ausführungsform kann das Sendesignal eine Wechselspannung sein.
In diesem Fall kann der erste Primärwindungsabschnitt auch lediglich n Windungen umfassen, wobei kein mittlerer Windungsabgriff 16 vorhanden ist.

Ferner zeigt Figur 1 einen Ultraschallwandler 40, der dazu geeignet ist, elektrische Signale in Schallsignale zu wandeln und Schallsignale in elektrische Signale zu wandeln. Der Ultraschallwandler 40 ist auf der Sekundärseite 12 des Übertragers 10 über alle y Windungen der Sekundärspule 15 mit dem Übertrager 10 verbunden.

Des Weiteren ist eine Empfangsschaltung 30 zur Verarbeitung eines an ihrem Empfangseingang 32 anliegenden Empfangssignals gezeigt. Die Empfangsschaltung 30 ist ein nichtinvertierender Verstärker, der mittels eines Operationsverstärkers 31 aufgebaut ist. Das Empfangssignal liegt in dieser Ausführungsform über einen ersten Schalter S1 direkt an dem positiven (nicht invertierenden) Eingang dieses Operationsverstärkers 31 an, dessen negativer (invertierender) Eingang über einen Spannungsteiler aus einen vierten Widerstand R4 und einen fünften Widerstand R5 die Ausgangsspannung des Operationsverstärkers 31empfängt, wodurch sich eine Verstärkung v = 1+ (R4/R5) des nichtinvertierenden Operationsverstärkers 31 ergibt. Damit wird das Empfangssignal verstärkt und steht als verstärktes Empfangssignal am Ausgang des Operationsverstärkers 31 und damit am Ausgang der Empfangsschaltung 30 bereit. Die Spannungsfestigkeit der Empfangsschaltung 30 wird in dieser Ausführungsform durch die Spannungsfestigkeit des ersten Schalters S1 definiert, da dieser während des Sendevorgangs geöffnet ist. In einer alternativen Ausführungsform ohne den ersten Schalter S1 ist die Spannungsfestigkeit der Empfangsschaltung 30 durch die Spannungsfestigkeit des nichtinvertierenden Eingangs des Operationsverstärkers 31 definiert. Die Spannungsfestigkeit ist dabei die maximale Spannung, die an einer Komponente angelegt werden kann, ohne diese Komponente damit zu beschädigen.

Durch eine nicht gezeigte Ablaufsteuerung wird der erste Schalter S1, der ein elektronischer Schalter (z.B. ein MOS-FET) ist, gesteuert. In einer Sendephase ist der erste Schalter S1 offen und die Empfangsschaltung 30 damit von dem Übertrager 10 getrennt. Während einer Empfangsphase ist der erste Schalter S1 geschlossen und die Empfangsschaltung 30 somit mit dem Übertrager 10 verbunden. Dies ist vorteilhaft, da die Spannungsfestigkeit des ersten Schalters S1 höher ist, als die Spannungsfestigkeit des Operationsverstärkers 31. Des Weiteren wird durch den während der Sendephase geöffneten ersten Schalter S1 verhindert, dass ein Anteil der Leistung des Sendesignals über die Empfangsschaltung 30 abgeleitet wird, und somit nicht zur Sendeleistung des Ultraschallwandlers 40 beiträgt.

Der Eingang der Empfangsschaltung 30 ist über einen zusätzlichen Windungsabgriff 13 der Primärspule 14 mit der Primärseite 11 des Übertragers 10 verbunden, wobei zwischen dem zusätzlichen Windungsabgriff 13 und dem mittleren Windungsabgriff 16 ein zusätzlicher Windungsabschnitt mit z Windungen liegt. Dieser zusätzliche Windungsabschnitt überlappt mit dem ersten Primärwindungsabschnitt. Das Empfangssignal wird über diesen zusätzlichen Windungsabschnitt an die Empfangsschaltung 30 abgegeben.

Ein typisches Windungsverhältnis von n/y ist 1/16. Liegt auf der Primärseite 11 des Übertragers 10 beispielsweise ein Sendesignal mit einer Amplitude von 6V an, dann resultiert daraus eine Signalamplitude auf der Sekundärseite von 96V. In der Regel liegt auf der Sekundärseite des Übertragers eine Spannung von mehr als 40V, in der Regel bis zu 100V an. Damit wird eine hohe Spannung an dem Ultraschallwandler 40 angelegt und somit wird ein hoher Schalldruck erzeugt. Es wird eine große Reichweite der Ultraschall Sende- und Empfangseinrichtung 1 erzielt. Das Windungsverhältnis n/z ist so gewählt, dass die Spannungsfestigkeit der Empfangsschaltung 30 nicht überschritten wird. Bei einer beispielhaften Spannungsfestigkeit von 12V und einer Sendesignalamplitude von 6V wäre also ein maximales Windungsverhältnis von 1/2 zu wählen. Da die Windungszahl z kleiner ist, als die Windungszahl y, wird die Spannung am Eingang der Empfangsschaltung reduziert. Trotz der hohen Spannung an dem Ultraschallwandler 40 kommt es zu keiner Schädigung der Empfangsschaltung 30. Die Windungszahlen n, x und y können unabhängig voneinander gewählt werden, und somit auf die verwendeten Komponenten angepasst werden. Dabei ist es bevorzugt, dass die Windungszahlen ganzzahlige Vielfache der jeweils anderen Windungszahlen sind.

Zwischen den Ausgängen 21, 21' der Sendeschaltung 20, die durch die Kollektoren der beiden Transistoren T1 und T2 beschrieben werden, ist ein mit einem zweiten Schalter S2 zuschaltbarer Dämpfungswiderstand Rd geschaltet. Der Dämpfungswiderstand Rd wird durch den zweiten Schalter S2 nach der Sendephase und vor der Empfangsphase in einer Dämpfungsphase hinzugeschaltet und ist mit dem Übertrager 10 über alle 2n Windungen des ersten Primärwindungsabschnitts verbunden. In dieser Dämpfungsphase wird der Ultraschallwandler 40 nicht mehr angeregt und es erfolgt ein Ausschwingen der Ultraschallmembran. Dieses Ausschwingen erzeugt einen von dem Ultraschallwandler 40 ausgehenden alternierenden Induktionsstrom. Dieser wird über den Übertrager 10 zu dem zweiten Schalter S2 und den Dämpfungswiderstand Rd geleitet. Durch den Dämpfungswiderstand Rd wird der Induktionsstrom dissipiert und somit die Ausschwingzeit der Ultraschallmembran des Ultraschallwandlers 40 verkürzt. Der Dämpfungswiderstand Rd ist dabei vorteilhaft gewählt, wenn die Leistungsanpassung zwischen Primär- und Sekundärseite des Übertragers 10 gewährleistet ist. In diesem Ausführungsbeispiel ist der Widerstand deshalb folgendermaßen gewählt: Rd = (4n²/y²) ^{∗} Rs. Ist die meiste Energie abgebaut, so wird die Empfangsschaltung durch den zweiten Schalter S2 zugeschaltet. In der Empfangsphase ist der zweite Schalter S2 geöffnet und der Dämpfungswiderstand Rd somit abgeschaltet. Somit wird die Sensitivität der Ultraschall Sende- und Empfangsvorrichtung 1 während der Empfangsphase gesteigert.

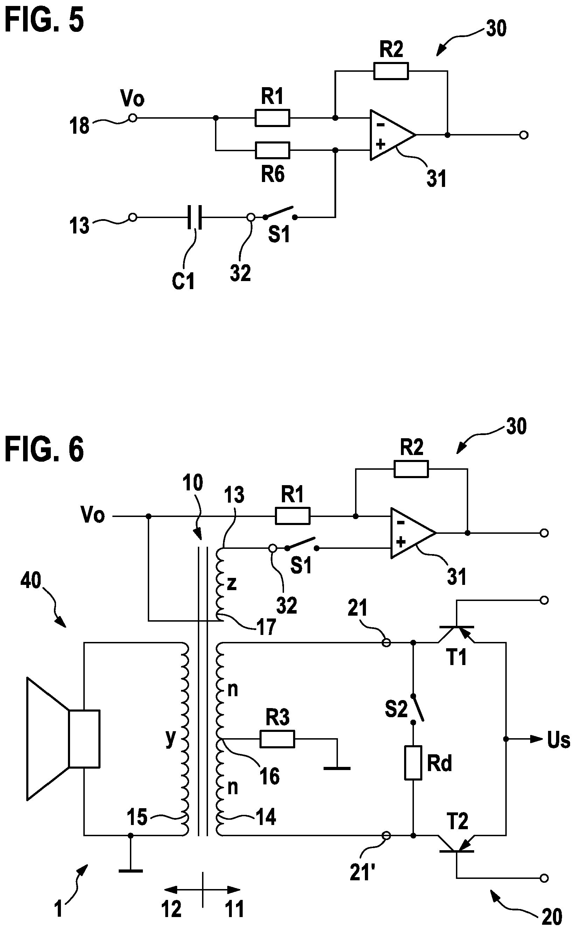

Gegenüber der in Figur 5 gezeigten Ultraschall Sende- und Empfangsvorrichtung 1 wird die Empfangsschaltung 30 durch den ersten Schalter S1 derart abgeschaltet, dass der zur Verfügung stehende Strom bestmöglich in den Ultraschallwandler 40 fließt. Dadurch ist ein wesentlich höherer Schalldruck möglich. Dieser ist im Idealfall doppelt so hoch. Hierbei wird aber auch die Spannung des Ultraschallwandlers 40 verdoppelt und damit die Leistungsaufnahme des Ultraschallwandlers 40 vervierfacht. Bei gleicher Leistungsaufnahme der Ultraschall Sende- und Empfangsvorrichtung 1 ist eine Zunahme von 3 dB beim Schalldruck realistisch und damit auch eine doppelte Schallleistung. Bei gleichem Schalldruck wird eine geringere Leistungsaufnahme der Ultraschall Sende- und Empfangsvorrichtung 1 erzielt. Im Optimalfall ist die Leistungsaufnahme halbiert. Im Falle des höheren Schalldrucks können Objekte sicherer und in weiteren Entfernungen erkannt werden. Im Falle des gleichen Schalldrucks können die einzelnen Komponenten für einen geringeren Strom auf der Primärseite 11 des Übertragers 10 ausgelegt werden, so dass wiederum Kosten eingespart werden können. Auf diese Weise werden ebenfalls Probleme bei der Leistungselektronik reduziert, wie auch Spannungsabfälle auf den Versorgungsleitungen der Ultraschall Sende- und Empfangsvorrichtung 1 durch ohmsche Verluste. Damit wird die Ultraschall Sende- und Empfangsvorrichtung 1 stabiler. Ferner weist die in Figur 1 gezeigte Schaltung den Vorteil auf, dass der Widerstand R1 nicht am Eingang der Empfangsschaltung angebracht ist. Dadurch wird ein für das Widerstandsrauschen wirksamer Quellwiderstand um den Widerstandswert von R1 reduziert. Der Quellwiderstand entspricht somit in etwa einem Widerstand des Ultraschallwandlers 40. Bei der in Figur 1 gezeigten Schaltung ist der Quellwiderstand dagegen näherungsweise der doppelte Innenwiderstand des Ultraschallwandlers 40, da dieser einer Parallelschaltung des zweiten Widerstandes R2 und des in Reihe geschalteten Innenwiderstandes R2 und des ersten Widerstandes R1 entspricht. Somit ist der Widerstand gleich (Rs + R1) || R2.

Die Anordnung des ersten Schalter S1 und der Empfangsschaltung 30 auf der Primärseite 11 des Übertragers 10 ist vorteilhaft, da das Schalten der hohen Spannungen auf der Sekundärseite 12 des Ultraschallwandlers 10 zwar möglich ist, allerdings zu hohen Bauteilkosten führt. Aus diesem Grund ist hier das Zu- und Abschalten der Empfangsschaltung 30 auf der Primärseite 11 des Übertragers 10 ermöglicht. Die Spannung an dem ersten Schalter S1 ist geringer als die Spannung an dem Ultraschallwandler 40, da die Windungszahl z kleiner ist als die Windungszahl y. Bei ausreichender Spannungsfestigkeit des Operationsverstärkers 31 der Empfangsschaltung 30 kann auf den ersten Schalter S1 verzichtet werden.

Figur 2 zeigt einen Schaltplan einer Ultraschall Sende- und Empfangsvorrichtung 1 gemäß einer zweiten Ausführungsform der Erfindung. Die zweite Ausführungsform entspricht im Wesentlichen der ersten Ausführungsform.
Allerdings ist der mit dem zweiten Schalter S2 zuschaltbare Dämpfungswiderstand Rd zwischen den durch T1 beschriebenen Ausgang der Sendeschaltung 20 und das Massepotential der Ultraschall Sende- und Empfangsvorrichtung 1 geschaltet. Da der mittlere Windungsabgriff 16 über den dritten Widerstand R3 ebenso auf das Massepotential gelegt ist, ist der Dämpfungswiderstand Rd über n Windungen mit dem ersten Primärwindungsabschnitt verbunden. Diese Ausführungsform ermöglicht die vorteilhafte Nutzung des Widerstandes R3. Es wird eine kleinere Dimensionierung von Rd ermöglicht, da die Widerstände R3 und Rd in Reihe geschaltet sind und sich somit für den durch den zweiten Schalter S2 beschriebenen Stromkreis summieren. Der Dämpfungswiderstand Rd ist dabei vorteilhaft gewählt, wenn die Leistungsanpassung der zwischen Primär- und Sekundärseite des Übertragers 10 gewährleistet ist. Dabei ist die Reihenschaltung von Rd und R3 zu beachten.

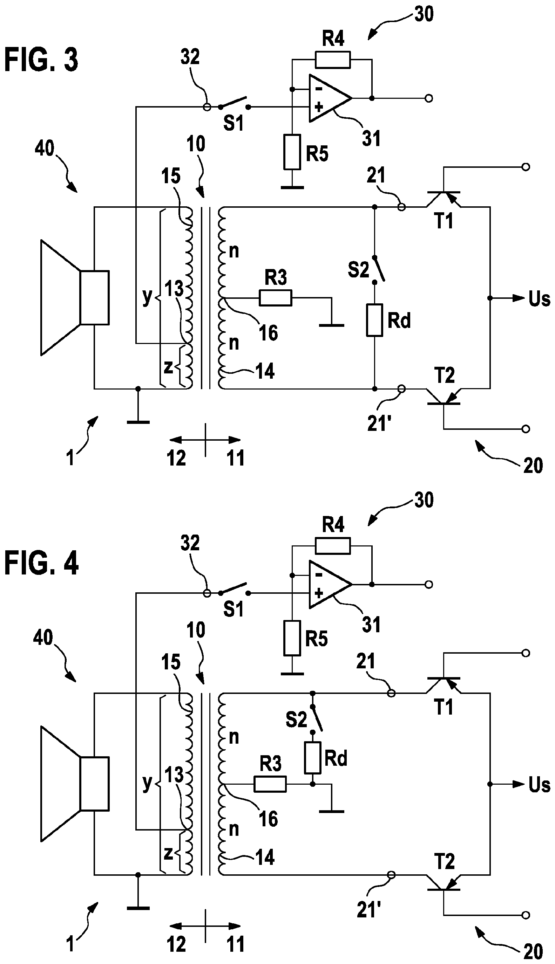

Figur 3 zeigt einen Schaltplan einer Ultraschall Sende- und Empfangsvorrichtung 1 gemäß einer dritten Ausführungsform der Erfindung. Die dritte Ausführungsform entspricht im Wesentlichen der ersten Ausführungsform. Allerdings ist die Empfangsschaltung 30 auf der Sekundärseite 12 des Übertragers 10 mit der Sekundärspule 15 verbunden. Die Verbindung erfolgt über einen zusätzlichen Windungsabgriff 13. Ein Ausgang des Ultraschallwandlers 40, der mit der Sekundärspule 15 des Übertragers 10 verbunden ist, ist zudem mit dem Massepotential der Ultraschall Sende- und Empfangsvorrichtung 1 verbunden. Ein Teilwindungsabschnitt mit z Windungen liegt zwischen dem zusätzlichen Windungsabgriff 13 und einer äußersten Windung der Sekundärspule 15, die auf der Seite des Ausgangs des Ultraschallwandlers 40 liegt, der mit dem Massepotential der Ultraschall Sende- und Empfangsvorrichtung 1 verbunden ist. Dieser Teilwindungsabschnitt mit z Windungen, ist ein Teil der Sekundärspule 15 mit y Windungen. Somit ist z < y. Es ist ersichtlich, dass in dieser Ausführungsform keine zusätzlichen Windungen auf der Sekundärseite des Übertragers 10 benötigt werden, womit eine kostengünstigere Ausführung ermöglicht wird. Durch das somit gegebene Windungsverhältnis z/y wird die Spannung an der Empfangsschaltung 30 reduziert. Bei entsprechender Anordnung der Windungsabgriffe sind die Spannungsverhältnisse am Ultraschallwandler 40 und an der Empfangsschaltung 30 identisch zu der in Figur 1 gezeigten Ultraschall Sende- und Empfangsvorrichtung 1.

Die Windungszahlen n, x und y sind so gewählt, wie in der ersten Ausführungsform.

Figur 4 zeigt einen Schaltplan einer Ultraschall Sende- und Empfangsvorrichtung 1 gemäß einer vierten Ausführungsform der Erfindung. Die vierte Ausführungsform entspricht im Wesentlichen der dritten Ausführungsform.
Allerdings ist der mit dem zweiten Schalter S2 zuschaltbarer Dämpfungswiderstand Rd zwischen den durch T1 beschriebenen Ausgang der Sendeschaltung 20 und das Massepotential der Ultraschall Sende- und Empfangsvorrichtung 1 geschaltet. Da der mittlere Windungsabgriff 16 über den dritten Widerstand R3 ebenso auf das Massepotential gelegt ist, ist der Dämpfungswiderstand Rd über n Windungen mit dem ersten Primärwindungsabschnitt verbunden. Diese Ausführungsform ermöglicht die vorteilhafte Nutzung des Widerstandes R3. Es wird eine kleinere Dimensionierung von Rd ermöglicht, da die Widerstände R3 und Rd in Reihe geschaltet sind und sich somit für den durch den zweiten Schalter S2 beschriebenen Stromkreis summieren. Der Dämpfungswiderstand Rd ist dabei vorteilhaft gewählt, wenn die Leistungsanpassung der zwischen Primär- und Sekundärseite des Übertragers 10 gewährleistet ist. Dabei ist die Reihenschaltung von Rd und R3 zu beachten.

Figur 5 zeigt eine alternative Ausführungsform einer Empfangsschaltung 30 einer Ultraschall Sende- und Empfangsvorrichtung 1. Die in Figur 5 gezeigte Empfangsschaltung 30 ist geeignet, ein Empfangssignal auszuwerten, falls nur positive Spannungen ausgewertet werden können. Dazu wird eine Offsetspannung vor dem Verstärker bereitgestellt. Die Empfangsschaltung 30 ist über einen Kondensator C1 mit dem zusätzlichen Windungsabgriff 13 verbunden. Durch den Schalter S1 kann die Empfangsschaltung 30 on dem Übertrager 10 getrennt werden, und durch den Kondensator C1 wird ein Gleichspannungsanteil vom Empfangssignal entkoppelt. Der Empfangseingang 32 der Empfangsschaltung 30 ist mit dem nicht invertierenden Eingang des Operationsverstärkers 31 verbunden. Ferner ist der Empfangseingang 32 über einen sechsten Widerstand R6 mit einem Ausgang 18 einer Spannungsquelle verbunden, die eine Offsetspannung Vo bereitstellt. Diese Offsetspannung Vo entspricht vorzugsweise der Hälfte einer Versorgungsspannung VDD des Operationsverstärkers 31 (Vo = VDD/2). Die Spannung des entkoppelten Empfangssignals wird somit um Vo variiert. Der Ausgang 18 der Spannungsquelle ist des Weiteren über den Widerstand R1 mit dem invertierenden Eingang des Operationsverstärkers 31 verbunden. Der invertierende Eingang des Operationsverstärkers 31 ist ferner über den zweiten Widerstand R2 mit seinem Ausgang verbunden. Somit ist der Operationsverstärker 31 als ein invertierender Operationsverstärker mit einer Verstärkung v = - (R2/R1) geschaltet.

Figur 6 zeigt einen Schaltplan einer Ultraschall Sende- und Empfangsvorrichtung 1 gemäß einer fünften Ausführungsform der Erfindung. Die fünfte Ausführungsform entspricht im Wesentlichen der dritten Ausführungsform. Im Gegensatz zu der dritten Ausführungsform umfasst der Übertrager 10 eine Tertiärspule 17 mit z Windungen, die auch den zusätzlichen Windungsabgriff 13 umfasst. Die Empfangsschaltung 30 ist über alle z Windungen der Tertiärspule 17 mit dem Übertrager 10 verbunden. Die Empfangsschaltung 30 ist dabei durch einen invertierend geschalteten Operationsverstärker 31 ausgeführt. Die Verstärkung v des Operationsverstärkers 31 wird dabei durch einen zwischen den invertierenden Eingang des Operationsverstärkers 31 und den Eingang der Empfangsschaltung 30 geschalteten ersten Widerstand R1 und einen zwischen den Ausgang des Operationsverstärkers 31 und dessen invertierenden Eingang geschalteten zweiten Widerstand R2 wie folgt gegeben: v = -(R2/R1). Der nicht invertierende Eingang des Operationsverstärkers 31 ist über den ersten Schalter S1 elektrisch mit einer äußeren Windung der Tertiärspule 17 und somit mit dem zusätzlichen Windungsabgriff 13 verbunden. Der durch den Widerstand R1 beschriebene Eingang der Empfangsschaltung 30 ist derart mit der Tertiärspule 17 verbunden, dass die Empfangsschaltung 30 über alle z Windungen der Tertiärspule 17 mit dem Übertrager 10 verbunden ist. Zudem wird eine Offsetspannung Vo an dem durch den Widerstand R1 beschriebene Eingang der Empfangsschaltung 30 angelegt. Diese Offsetspannung entspricht der Hälfte der Versorgungsspannung VDD des Operationsverstärkers (Vo = VDD/2). Diese Ausführungsform erlaubt eine Entkopplung der Empfangsschaltung 30 von der Sendeschaltung 20 und dem Ultraschallwandler 40 durch den Übertrager. Der in Figur 5 gezeigte Kondensator C1 sowie der in Figur 5 gezeigte Widerstand R6, wird in dieser Ausführungsform nicht benötigt, da eine Entkoppelung des Empfangssignals von einem Gleichstromanteil durch den Übertrager 10 erfolgt.

Neben der obigen schriftlichen Offenbarung wird explizit auf die Offenbarung der Figuren 1 bis 7 verwiesen.

## Patentansprüche

1. Ultraschall Sende- und Empfangsvorrichtung (1) umfassend:
eine Sendeschaltung (20) zur Erzeugung eines Sendesignals an ihren Signalausgängen (21, 21'),
einen Ultraschallwandler (40), der dazu eingerichtet ist, elektrische Signale in Schallsignale zu wandeln und Schallsignale in elektrische Signale zu wandeln,
einen Übertrager (10), dessen Primärseite (11) mit den Signalausgängen (21, 21') der Sendeschaltung (20) und dessen Sekundärseite (12) mit dem Ultraschallwandler (40) verbunden ist, und
eine Empfangsschaltung (30) zur Verarbeitung eines an ihrem Empfangseingang (32) anliegenden Empfangssignals,
wobei der Empfangseingang (32) der Empfangsschaltung (30) über einen zusätzlichen Windungsabgriff (13) des Übertragers (10) an den Übertrager (10) angeschlossen ist, wobei der zusätzliche Windungsabgriff (13) derart in den Übertrager (10) eingebracht ist, dass das transformierte Sendesignal an dem Empfangseingang (32) der Empfangsschaltung (30) mit einem geringeren Verstärkungsfaktor in seiner Spannungsamplitude verstärkt wird als das transformierte Sendesignal, das den Ultraschallwandler (40) anregt,
wobei der Übertrager (10) auf der Primärseite (11) eine Primärspule (14) mit einem ersten Primärwindungsabschnitt mit mindestens n Windungen umfasst, und
wobei die Sendeschaltung (20) mit dem ersten Primärwindungsabschnitt verbunden ist, und den Übertrager (10) über n Windungen des ersten Primärwindungsabschnittes anregt,
**dadurch gekennzeichnet, dass**
der Übertrager (10) auf seiner Sekundärseite (12) eine Sekundärspule (15) mit y Windungen umfasst, die einen Teilwindungsabschnitt mit z Windungen umfasst, wobei z<y ist,
der Ultraschallwandler (40) über alle y Windung der Sekundärspule (15) mit dem Übertrager (10) verbunden ist,
die Empfangsschaltung (30) über alle z Windungen des Teilwindungsabschnittes mit dem Übertrager (10) verbunden ist, und
das Verhältnis zwischen den Windungsanzahlen z und n derart gewählt ist, dass die maximale Amplitude eines Sendesignals, welches direkt über den Übertrager (10) an die Empfangsschaltung (30) übertragen wird, die Spannungsfestigkeit der Empfangsschaltung (30) nicht übersteigt.

2. Ultraschall Sende- und Empfangsvorrichtung (1) nach Anspruch 1, **dadurch gekennzeichnet, dass** am Empfangseingang (32) der Empfangsschaltung (30) ein erster Schalter (S1) angeordnet ist, durch den die Eingangsseite der Empfangsschaltung (30) von dem Übertrager (10) getrennt werden kann.

3. Ultraschall Sende- und Empfangsvorrichtung (1) nach einem der vorgehenden Ansprüche, **gekennzeichnet durch** einen zuschaltbaren Dämpfungswiderstand (Rd), der geeignet ist, die Schwingungen des Ultraschallwandlers (40) zu dämpfen.

4. Ultraschall Sende- und Empfangsvorrichtung (1) nach Anspruch 3, **dadurch gekennzeichnet, dass** der zuschaltbare Dämpfungswiderstand (Rd) mit der Sekundärseite (12) oder der Primärseite (11) des Übertragers (10) verschaltet ist.

5. Ultraschall Sende- und Empfangsvorrichtung nach einem der Ansprüche 3 oder 4, **dadurch gekennzeichnet, dass** der zuschaltbare Dämpfungswiderstand (Rd) und die Sendeschaltung (20) mit demselben Windungsabschnitt verbunden sind.

6. Fahrassistenzsystem, umfassend eine Ultraschall Sende- und Empfangsvorrichtung (1) nach den Ansprüchen 1 bis 5.

7. Fahrzeug, umfassend ein Fahrassistenzsystem nach Anspruch 6.

## Claims

1. Ultrasonic transmission and reception apparatus (1) comprising:
a transmission circuit (20) for generating a transmission signal at its signal outputs (21, 21'),
an ultrasonic transducer (40) which is set up to convert electrical signals into sound signals and to convert sound signals into electrical signals,
a transformer (10), the primary side (11) of which is connected to the signal outputs (21, 21') of the transmission circuit (20) and the secondary side (12) of which is connected to the ultrasonic transducer (40), and
a reception circuit (30) for processing a reception signal applied to its reception input (32),
wherein the reception input (32) of the reception circuit (30) is connected to the transformer (10) via an additional winding tap (13) of the transformer (10), wherein the additional winding tap (13) is inserted into the transformer (10) in such a manner that the transformed transmission signal at the reception input (32) of the reception circuit (30) is amplified with a lower gain factor in its voltage amplitude than the transformed transmission signal which excites the ultrasonic transducer (40),
wherein the transformer (10) comprises, on the primary side (11), a primary coil (14) having a first primary winding section with at least n windings, and
wherein the transmission circuit (20) is connected to the first primary winding section and excites the transformer (10) via n windings of the first primary winding section,
**characterized in that**
the transformer (10) comprises, on its secondary side (12), a secondary coil (15) having y windings which comprises a partial winding section with z windings, where z<y,
the ultrasonic transducer (40) is connected to the transformer (10) via all y windings of the secondary coil (15),
the reception circuit (30) is connected to the transformer (10) via all z windings of the partial winding section, and
the ratio of the numbers of windings z and n is selected in such a manner that the maximum amplitude of a transmission signal which is directly transmitted to the reception circuit (30) via the transformer (10) does not exceed the dielectric strength of the reception circuit (30).

2. Ultrasonic transmission and reception apparatus (1) according to Claim 1, **characterized in that** a first switch (S1) is arranged at the reception input (32) of the reception circuit (30) and can be used to isolate the input side of the reception circuit (30) from the transformer (10).

3. Ultrasonic transmission and reception apparatus (1) according to one of the preceding claims, **characterized by** a connectable damping resistor (Rd) which is suitable for damping the oscillations of the ultrasonic transducer (40).

4. Ultrasonic transmission and reception apparatus (1) according to Claim 3, **characterized in that** the connectable damping resistor (Rd) is connected to the secondary side (12) or the primary side (11) of the transformer (10).

5. Ultrasonic transmission and reception apparatus according to either of Claims 3 and 4, **characterized in that** the connectable damping resistor (Rd) and the transmission circuit (20) are connected to the same winding section.

6. Driving assistance system comprising an ultrasonic transmission and reception apparatus (1) according to Claims 1 to 5.

7. Vehicle comprising a driving assistance system according to Claim 6.

## Revendications

1. Dispositif émetteur-récepteur d'ultrasons (1), comprenant :
un circuit d'émission (20) destiné à générer un signal d'émission au niveau de ses sorties de signal (21, 21'), un transducteur à ultrasons (40) destiné à convertir des signaux électriques en signaux acoustiques et à convertir des signaux acoustiques en signaux électriques,
un transformateur (10) dont le primaire (11) est relié aux sorties de signal (21, 21') du circuit d'émission (20) et dont le secondaire (12) est relié au transducteur à ultrasons (40), et
un circuit de réception (30) destiné à traiter un signal de réception appliqué à son entrée de réception (32),
dans lequel l'entrée de réception (32) du circuit de réception (30) est raccordée au transformateur (10) par le biais d'un branchement d'enroulement (13) supplémentaire du transformateur (10), le branchement d'enroulement (13) supplémentaire étant introduit dans le transformateur (10) de telle manière que le signal d'émission transformé appliqué à l'entrée de réception (32) du circuit de réception (30) soit amplifié en amplitude de tension avec un facteur d'amplification inférieur à celui du signal d'émission transformé qui attaque le transducteur à ultrasons (40),
dans lequel le transformateur (10) comprend sur le côté primaire (11) une bobine primaire (14) comportant une première partie d'enroulement primaire ayant au moins n enroulements, et
dans lequel le circuit d'émission (20) est relié à la première partie d'enroulement primaire, et attaque le transformateur (10) par le bais de n enroulements de la première partie d'enroulement primaire,
**caractérisé en ce que**
le transformateur (10) comprend sur son côté secondaire (12) une bobine secondaire (15) ayant y enroulements, qui comprend une partie d'enroulement partielle ayant z enroulements, où z<y,
le transducteur à ultrasons (40) est relié au transformateur (10) par le bais de la totalité des y enroulements de la bobine secondaire (15),
le circuit de réception (30) est relié au transformateur (10) par le biais de la totalité des z enroulements de la partie d'enroulement partielle, et
le rapport entre les nombres d'enroulements z et n est sélectionné de telle manière que l'amplitude maximale d'un signal d'émission qui est transmis directement par le biais du transformateur (10) au circuit de réception (30) ne dépasse pas la rigidité diélectrique du circuit de réception (30).

2. Dispositif émetteur-récepteur d'ultrasons (1) selon la revendication 1, **caractérisé en ce qu'**un premier commutateur (S1) est disposé au niveau de l'entrée de réception (32) du circuit de réception (30), par le biais duquel le côté entrée du circuit de réception (30) peut être séparé du transformateur (10).

3. Dispositif émetteur-récepteur d'ultrasons (1) selon l'une des revendications précédentes, **caractérisé par** une résistance d'atténuation commutable (Rd) qui convient pour atténuer les oscillations du transducteur à ultrasons (40).

4. Dispositif émetteur-récepteur d'ultrasons (1) selon la revendication 3, **caractérisé en ce que** la résistance d'atténuation commutable (Rd) est connectée au côté secondaire (12) ou au côté primaire (11) du transformateur (10).

5. Dispositif émetteur-récepteur d'ultrasons selon l'une des revendications 3 ou 4, **caractérisé en ce que** la résistance d'atténuation commutable (Rd) et le circuit d'émission (20) sont reliés à la même partie d'enroulement.

6. Système d'aide à la conduite comprenant un dispositif émetteur-récepteur d'ultrasons (1) selon les revendications 1 à 5.

7. Véhicule comprenant un système d'aide à la conduite selon la revendication 6.
